# EUROPEAN PATENT SPECIFICATION

(11) **EP 3 857 630 B1**
(45) Date of publication and mention of the grant of the patent: **24.08.2022**
(21) Application number: 19769459.9
(22) Date of filing: 16.09.2019
(51) Int. Cl.: H01M 4/131, H01M 4/36, H01M 4/38, H01M 4/505, H01M 4/525, C01G 51/00, C01G 53/00, C01F 7/36

(54) **PROCESS FOR MAKING A COATED OXIDE MATERIAL**
VERFAHREN ZUR HERSTELLUNG EINES UMHÜLLTEN OXIDMATERIALS
PROCÉDÉ DE FABRICATION D'UN MATÉRIAU D'OXYDE REVÊTU

(30) Priority: 28.09.2018 EP 18197693
(43) Date of publication of application: 04.08.2021
(73) Proprietor: BASF SE, 67056 Ludwigshafen am Rhein (DE); Karlsruher Institut für Technologie, 76131 Karlsruhe (DE)
(72) Inventor: HARTMANN, Pascal, 67056 Ludwigshafen (DE); SOMMER, Heino, 67056 Ludwigshafen (DE); WOLF, Hannes, 67056 Ludwigshafen (DE); STRAUSS, Florian, 76344 Eggenstein-Leopoldshafen (DE); NEUDECK, Sven, 76344 Eggenstein-Leopoldshafen (DE); BREZESINSKI, Torsten, 76344 Eggenstein-Leopoldshafen (DE)
(74) Representative: BASF IP Association
(86) International application number: PCT/EP2019/074632
(87) International publication number: WO 2020/064388

(56) References cited:
- WO-A1-2018/162234
- US-A1- 2002 061 444
- US-B1- 6 749 965

## Description

The present invention is directed to a process for making a coated oxide material, said process comprising the following steps:
(a) providing a particulate material selected from lithiated nickel-cobalt aluminum oxides and lithiated layered nickel-cobalt-manganese oxides with a nickel content in the range of from 10 to 95 mole-% nickel, percentages referring to the metals other than lithium in such particulate material,
(b) optionally, treating said particulate material with an aqueous medium, followed by removing said aqueous medium,
(c) treating said particulate material from step (a) or (b) with a metal amide or alkyl metal compound dissolved or slurried in an organic solvent,
(d) removal of organic solvent employed in step (c).

In addition, the present invention is directed towards Ni-rich electrode active materials.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Currently, a certain interest in so-called Ni-rich electrode active materials may be observed, for example electrode active materials that contain 75 mole-% or more of Ni, referring to the total TM content.

One problem of lithium ion batteries - especially of Ni-rich electrode active materials - is attributed to undesired reactions on the surface of the electrode active materials. Such reactions may be a decomposition of the electrolyte or the solvent or both. It has thus been tried to protect the surface without hindering the lithium exchange during charging and discharging. Examples are attempts to coat the electrode active materials with, e.g., aluminium oxide or calcium oxide, see, e.g., US 8,993,051.

Other theories link undesired reactions to free LiOH or Li₂CO₃ on the surface. Attempts have been made to remove such free LiOH or Li₂CO₃ by washing the electrode active material with water, see, e.g., JP 4,789,066 B, JP 5,139,024 B, and US2015/0372300. However, in some instances it was observed that the properties of the resultant electrode active materials did not improve. Documents US 2002/061444 A1 and US 6 749 965 B1 disclose a method to produce a coated particulate oxide electrode active material by treating said particulate with an organic solution or slurry of a metal alkoxide. Document WO 2018/162234 A1 discloses a process for making a coated oxide by means of treating said particulate material with a metal amide or alkyl metal compound in the gas phase.

It was an objective of the present invention to provide a process for making electrode active materials with excellent electrochemical properties. It was also an objective to provide especially so-called Ni-rich electrode active materials with excellent electrochemical properties. Accordingly, the process defined at the outset has been found, hereinafter also referred to as "inventive process". The inventive process comprises at least three steps, step (a), step (c) and step (d), and it may comprise optional step (b). Said steps are described in more detail below. Step (a) includes providing a particulate material selected from lithiated nickel-cobalt aluminum oxides and lithiated layered nickel-cobalt-manganese oxides. They each are selected from those with a nickel content in the range of from 10 to 95 mole-% nickel, referring to the metals other than lithium in such particulate material. Preferred are particulate material with the formula Li₁₊ₓTM₁₋ₓO₂, wherein TM contains a combination of Ni and Co and at least one metal selected from Al and Mn with a nickel content in the range of from 10 to 95 mole-% nickel, referring to the metals, and, optionally, at least one metal selected from Ba, and Mg and, optionally, one or more transition metals other than Ni, Co, and Mn, and x is in the range of from -0.1 to 0.33. Examples of layered nickel-cobalt-manganese oxides are compounds of the general formula Li₁₊ₓ[(NiₐCo_{b}Mn_{c})_{1-d}M¹_{d}]₁₋ₓO₂, with M¹ being selected from Mg, Nb, Ba, Al, Ti, Zr, Zn, Mo, Sb, V and Fe, the further variables being defined as follows:
-0.1 ≤ x ≤ 0.33, preferably - 0.05 ≤ x ≤ 0.05
0.1 ≤ a ≤ 0.9,
zero < b ≤ 0.5,
0.1 < c ≤ 0.6,
zero ≤ d ≤ 0.1, and a + b + c + d = 1.

In a preferred embodiment, in compounds according to general formula (I)

Li₍₁₊ₓ₎[(NiₐCo_{b}Mn_{c})_{1-d}M¹_{d}]₍₁₋ₓ₎O₂ (I)

M¹ is selected from Mg, Al and Ba,
and the further variables are defined as above.

Examples of lithiated nickel-cobalt aluminum oxides are compounds of the general formula Li[NiₕCoᵢAlⱼ]O_{2+r.} Typical values for r, h, i and j are:
h is in the range of from 0.8 to 0.90,
i is in the range of from 0.15 to 0.19,
j is in the range of from 0.01 to 0.05, and
r is in the range of from zero to 0.4.

Particularly preferred are Li₍₁₊ₓ₎[Ni_{0.33}Co_{0.33}Mn_{0.33}]₍₁₋ₓ₎O₂, Li₍₁₊ₓ₎[Ni_{0.5}Co_{0.2}Mn_{0.3}]₍₁₋ₓ₎O₂, Li₍₁₊ₓ₎[Ni_{0.6}Co_{0.2}Mn_{0.2}]₍₁₋ₓ₎O₂, Li₍₁₊ₓ₎[Ni_{0.7}Co_{0.2}Mn_{0.1}]₍₁₋ₓ₎O₂, and Li₍₁₊ₓ₎[Ni_{0.8}Co_{0.1}Mn_{0.1}]₍₁₋ₓ₎O₂, each with x as defined above.

Some elements are ubiquitous. In the context of the present invention, traces of ubiquitous metals such as sodium, calcium, iron or zinc, as impurities will not be taken into account in the description of the present invention. Traces in this context will mean amounts of 0.05 mol-% or less, referring to the total metal content of the particulate material.

Said particulate material is preferably provided without any additive such as conductive carbon or binder but as free-flowing powder. In particular, the particulate material is preferably free from conductive carbon, that means that the conductive carbon content of particulate material is less than 1% by weight, referring to said particulate material, preferably 0.001 to 1.0 % by weight or even below detection level.

In one embodiment of the present invention the particulate material has an average particle diameter (D50) in the range of from 3 to 20 µm, preferably from 5 to 16 µm. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the particulate material has a specific surface (BET), hereinafter also referred to as "BET surface", in the range of from 0.1 to 1.5 m²/g. The BET surface may be determined by nitrogen adsorption after outgassing of the sample at 200°C for 30 minutes or more in accordance with DIN ISO 9277:2010.

In one embodiment of the present invention, the particulate material provided in step (a) has a moisture content in the range of from 100 to 2,000 ppm, determined by Karl-Fischer titration, preferred are 200 to 1,200 ppm.

In the optional step (b), said particulate material is treated with an aqueous medium. Said aqueous medium may have a pH value in the range of from 2 up to 14, preferably at least 5, more preferably from 7 to 12.5 and even more preferably from 8 to 12.5. The pH value is measured at the beginning of step (b). It is observed that in the course of step (b), the pH value raises to at least 10.

It is preferred that the water hardness of aqueous medium and in particular of the water used for step (b) is at least partially removed, especially calcium. The use of desalinized water is preferred.

In one embodiment of the present invention, step (b) is performed by slurrying the particulate material from step (a) in water followed by removal of the water by a solid-liquid separation method and drying at a maximum temperature in the range of from 50 to 450°C.

In an alternative embodiment of step (b), the aqueous medium used in step (b) may contain ammonia or at least one transition metal salt, for example a nickel salt or a cobalt salt. Such transition metal salts preferably bear counterions that are not detrimental to an electrode active material. Sulfate and nitrate are feasible. Chloride is not preferred.

In one embodiment of the present invention, step (b) is performed at a temperature in the range of from 5 to 85°C, preferred are 10 to 60°C.

In one embodiment of the present invention, step (b) is performed at normal pressure. It is preferred, though, to perform step (b) under elevated pressure, for example at 10 mbar to 10 bar above normal pressure, or with suction, for example 50 to 250 mbar below normal pressure, preferably 100 to 200 mbar below normal pressure.

Step (b) may be performed, for example, in a vessel that can be easily discharged, for example due to its location above a filter device. Such vessel may be charged with starting material followed by introduction of aqueous medium. In another embodiment, such vessel is charged with aqueous medium followed by introduction of starting material. In another embodiment, starting material and aqueous medium are introduced simultaneously.

In one embodiment of the present invention, the volume ratio of starting material and total aqueous medium in step (b) is in the range of from 2:1 to 1:5, preferably from 2:1 to 1:2.

Step (b) may be supported by mixing operations, for example shaking or in particular by stirring or shearing, see below.

In one embodiment of the present invention, step (b) has a duration in the range of from 1 minute to 30 minutes, preferably 1 minute to less than 5 minutes. A duration of 5 minutes or more is possible in embodiments wherein in step (b), water treatment and water removal are performed overlapping or simultaneously.

In one embodiment of step (b), water treatment and water removal are performed consecutively. After the treatment with an aqueous medium in accordance to step (b), water may be removed by any type of filtration, for example on a band filter or in a filter press.

In one embodiment of the present invention, at the latest 3 minutes after commencement of step (b), water removal is started. Water removal includes removing said aqueous medium from treated particulate material by way of a solid-liquid separation, for example by decanting or preferably by filtration.

In one embodiment of the present invention, the slurry obtained in step (b) is discharged directly into a centrifuge, for example a decanter centrifuge or a filter centrifuge, or on a filter device, for example a suction filter or in a belt filter that is located preferably directly below the vessel in which step (b) is performed. Then, filtration is commenced.

In a particularly preferred embodiment of the present invention, step (b) is performed in a filter device with stirrer, for example a pressure filter with stirrer or a suction filter with stirrer. At most 3 minutes after - or even immediately after - having combined starting material and aqueous medium in accordance with step (b), removal of aqueous medium is commenced by starting the filtration. On laboratory scale, steps (b) may be performed on a Büchner funnel, and step (b) may be supported by manual stirring.

In a preferred embodiment, step (b) is performed in a filter device, for example a stirred filter device that allows stirring of the slurry in the filter or of the filter cake. By commencement of the filtration, for example pressure filtration or suction filtration, after a maximum time of 3 minutes after commencement of step (b), water removal is started.

In one embodiment of the present invention, the water removal has a duration in the range of from 1 minute to 1 hour.

In one embodiment of the present invention, stirring in step (b) is performed with a rate in the range of from 1 to 50 rounds per minute ("rpm"), preferred are 5 to 20 rpm.

In one embodiment of the present invention, filter media may be selected from ceramics, sintered glass, sintered metals, organic polymer films, non-wovens, and fabrics.

In one embodiment of the present invention, step (b) is carried out under an atmosphere with reduced CO₂ content, e.g., a carbon dioxide content in the range of from 0.01 to 500 ppm by weight, preferred are 0.1 to 50 ppm by weight. The CO₂ content may be determined by, e.g., optical methods using infrared light. It is even more preferred to perform step (b) under an atmosphere with a carbon dioxide content below detection limit for example with infrared-light based optical methods.

Subsequently, the water-treated material is dried, for example at a temperature in the range of from 40 to 250°C at a normal pressure or reduced pressure, for example 1 to 500 mbar. If drying under a lower temperature such as 40 to 100°C is desired a strongly reduced pressure such as from 1 to 20 mbar is preferred.

In one embodiment of the present invention, said drying is carried out under an atmosphere with reduced CO₂ content, e.g., a carbon dioxide content in the range of from 0.01 to 500 ppm by weight, preferred are 0.1 to 50 ppm by weight. The CO₂ content may be determined by, e.g., optical methods using infrared light. It is even more preferred to perform step (d) under an atmosphere with a carbon dioxide content below detection limit for example with infrared-light based optical methods.

In one embodiment of the present invention said drying has a duration in the range of from 1 to 10 hours, preferably 90 minutes to 6 hours.

In one embodiment of the present invention, the lithium content of an electrode active material is reduced by 1 to 5% by weight, preferably 2 to 4% is reduced by performing step (b). Said reduction mainly affects the so-called residual lithium.

In a preferred embodiment of the present invention, the material obtained from step (b) has a residual moisture content in the range of from 50 to 1,200 ppm, preferably from 100 to 400 ppm. The residual moisture content may be determined by Karl-Fischer titration.

In step (c), said particulate material from step (a) or (b) is treated with a metal amide or alkyl metal compound dissolved or slurried in an organic solvent.

In a preferred embodiment of the present invention, alkyl metal compound or metal amide, respectively, is selected from Al(R¹)₃, Al(R¹)₂OH, AlR¹(OH)₂, M²(R¹)_{4-y}H_{y}, M²[N(R²)₂]₄, and methyl alumoxane, wherein
R¹ are different or equal and selected from C₁-C₈-alkyl, straight-chain or branched,
R² are different or equal and selected from C₁-C₄-alkyl, straight-chain or branched,
M² is Ti or Zr, with Ti being preferred,

Examples of aluminum alkyl compounds are trimethyl aluminum, triethyl aluminum, triisobutyl aluminum, and methyl alumoxane.

Metal amides are sometimes also referred to as metal imides. An example of metal amides is Ti[N(CH₃)₂]₄.

Particularly preferred compounds are selected from metal alkyl compounds, and even more preferred is trimethyl aluminum.

In one embodiment of the present invention, the amount of or metal amide or alkyl metal compound is in the range of 0.1 to 1 g/kg particular material.

Preferably, the amount of or metal amide or alkyl metal compound, respectively, is calculated to amount to 80 to 200% of a monomolecular layer on the particular material per cycle.

Even more, the residual moisture of particulate material according to step (a) or (b), respectively, is determined by a method known *per se*, for example by Karl-Fischer titration, and then the amount of metal amide or alkyl metal compound, respectively, is calculated to a stoichiometric amount or to an excess in the range of 0.1 to 30 mole-%, preferably 1 up to 20 mole-%. Higher amounts of metal amide or alkyl metal compound, respectively, do not react with residual moisture of particulate material. An excess of metal amide or alkyl metal compound, respectively, as indicated above compensates for losses for any cause.

As indicated above, said metal amide or alkyl metal compound dissolved or slurried in an organic solvent. Suitable organic solvents are liquid at ambient temperature. Organic solvents suitable for metal amide or alkyl metal compounds are selected from aliphatic or aromatic or cycloaliphatic hydrocarbons, ethers, N-C₁-C₆-alkyl pyrrolidones such as N-methylpyrrolidone ("NMP") and N-ethylpyrrolidone ("NEP"), and mixtures of at least two of the foregoing.

Examples of aliphatic hydrocarbons are C₅-C₁₂-alkanes, for example n-pentane, n-hexane, n-heptane, n-octane, iso-octane, iso-hexane, n-nonane, iso-nonane, n-decane, iso-decane, isododecane, and n-dodecane, and mixtures of at least two of the foregoing.

Examples of aromatic hydrocarbons are benzene, toluene, ortho-xylene, meta-xylene, para-xylene, and combinations of at least two of the foregoing, for example mixtures from ortho- and meta-xylene and mixtures from ortho- and meta- and para-xylene.

Examples of cycloaliphatic hydrocarbons are cyclopentane, cyclohexane and cycloheptane.

Examples of ethers are aliphatic ethers such as, but not limited to diethylether, diisopropylether, and di-n-butyl ether, and cyclic ethers with a five- to six-membered ring such as, but not limited to tetrahydrofuran, tetrahydropyran and 1,4-dioxane.

In one embodiment of the present invention, step (c) may be performed at a temperature in the range of from 10 to 80°C, preferably from 15 to 40°C.

In one embodiment of the present invention, step (c) may be performed at a pressure in the range of from 0.01 bar to 10 bar, preferably 0.1 bar to 2 bar. Preferred is normal pressure (1 atm) ± 100 mbar.

In one embodiment of the present invention, step (c) may have a duration in the range of from 1 minute to 10 hours, preferred are one minute to 2 hours.

In one embodiment of the present invention, step (c) is performed by slurrying particulate material according to step (a) or (b) in an organic solvent and then adding or metal amide or alkyl metal compound, respectively, slurried or dissolved in the same solvent. In another embodiment of the present invention, a vessel is charged with metal amide or alkyl metal compound, respectively, dissolved or slurried in an organic solvent, and then particulate material according to step (a) or (b) is added, with or without organic solvent.

In one embodiment of the present invention, step (c) is performed by charging a filter device with particulate material according to step (a) or (b) and then adding a metal amide or alkyl metal compound, respectively, slurried or dissolved in an organic solvent, for example by pouring it over the particulate material. The organic solvent is then removed by solid-liquid separation, for example filtration.

Step (c) is preferably performed under exclusion of oxygen, humidity, and carbon dioxide, for example under an atmosphere of nitrogen or a rare gas such as argon.

In step (d), the solvent(s) employed in step (d) are removed. Said removal may be at least partially performed by a solid-liquid separation method, for example filtration or with a centrifuge. Some of the solvent may be removed by evaporation. However, it is preferred to remove decomposition products of metal amide or alkyl metal compound, respectively, in the course of solvent removal.

Solvent may be removed by any type of filtration, for example on a band filter or in a filter press or in a filter supported by suction. In one embodiment of the present invention, filter media for step (d) may be selected from ceramics, sintered glass, sintered metals, organic polymer films, non-wovens, and fabrics.

In one embodiment of the present invention, step (d) includes a vacuum drying operation at a temperature in the range of from 50 to 100°C, or drying at a temperature in the range of from 100 to 250°C at normal pressure. Said vacuum drying or drying at a temperature of from 100 to 250°C may be performed subsequently to a solid-liquid separation or instead of.

By the inventive process, electrode active materials with excellent electrochemical properties are obtained. By the inventive process, especially so-called Ni-rich electrode active materials with excellent electrochemical properties are obtained.

The present invention is further illustrated by the following working examples.

General remarks: N-methyl-2-pyrrolidone: NMP.
trimethyl aluminum: TMA, purchased as 2 M solution in toluene; Sigma-Aldrich. So-called anhydrous toluene was purchased from Sigma-Aldrich.

All syntheses were performed in an Ar-filled glovebox (concentrations of each [O₂], [H₂O] < 1 ppm; MBraun) using pre-dried equipment.

Step (a.1): A stirred tank reactor was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8:1:1 and a total transition metal concentration of 1.65 mol/kg. The aqueous sodium hydroxide solution was a 25 wt.% sodium hydroxide solution and 25 wt.% ammonia solutions in a weight ratio of 6. The pH value was kept at 12 by the separate feed of an aqueous sodium hydroxide solution. Beginning with the start-up of all feeds, mother liquor was removed continuously. After 33 hours all feed flows were stopped. A mixed transition metal (TM) oxyhydroxide precursor was obtained by filtration of the resulting slurry, washing with distilled water, drying at 120°C in air and sieving.

The mixed transition metal (TM) oxyhydroxide precursor obtained as described above (molar ratio Ni:Co:Mn 8:1:1) was mixed with LiOH monohydrate to obtain a Li/TM molar ratio of 1.03. The mixture was heated to 800 °C and kept for 10h in a forced flow of a mixture of 60% oxygen and 40% nitrogen (by volume). After cooling to ambient temperature, the powder was deagglomerated and sieved through a 32 µm mesh to obtain C-CAM.1 (step (a.1). (D50): 10.6 µm.

In this experiment, no step (b.1) was performed.

Step (c.1): An amount of 350 µl TMA solution (2 M) was diluted with 35 ml of anhydrous toluene and the resulting solution was passed through a PTFE syringe filter (0.2 µm pore size; Corning Inc., USA). A vessel was charged with 25 ml of the TMA solution so obtained, and C-CAM.1 (25 g) was slowly added and the resultant suspension was stirred at 20°C for four hours. The treated particulate material was filtered off, washed with anhydrous toluene (4 x 15 mL) and dried at room temperature in vacuum. A treated cathode active material CAM.1 was obtained. (D50): 10.6 µm.

### Electrode Preparation

Positive electrode: PVDF binder (Solef 5130) was dissolved in NMP (Merck) to produce a 7.5 wt.% solution. For electrode preparation, binder solution (3 wt.%), graphite (SFG6L, 2 wt.%), and carbon black (Super C65, 1 wt.-%) were suspended in NMP. After mixing using a planetary centrifugal mixer (ARE-250, Thinky Corp.; Japan), either CAM.1 (inventive) or C-CAM.1 (comparative) (94 wt.%) was added and the suspension was mixed again to obtain a lump-free slurry. The solid content of the slurry was adjusted to 65%. The slurry was coated onto Al foil using a KTF-S roll-to-roll coater (Mathis AG). Prior to use, all electrodes were calendared. The areal loading was 9.4 and 9.7 mg_{NCM}/cm² for CAM.1 and C-CAM.1, respectively.

Negative electrode: Active material: graphite, active material loading of 6.8 mg/cm².

### Cell Assembly and Electrochemical Testing

Pouch cells were built in a dry room with *T*_{dp} < -50 °C by stacking 50 x 50 mm² cathode, 60 x 60 mm² Celgard 2500 polypropylene separator and 52 x 52 mm² graphite anode using 1000 µl electrolyte: 1 M LiPF₆, ethylene carbonate, diethyl carbonate mixture (3:7) and 2% vinylene carbonate.

Electrochemical testing was performed using a multichannel battery cycler (Series 4000, MAC-COR Inc.; USA). After 12 h of equilibration, cell formation was done by constant current charging to 4.2 V at 25 °C and C/10, followed by degassing of the pouch cells. Long-term cycling was performed at 45 °C and 1C (1C = 150 mA/g_{CAM}) in the voltage range of 2.7 to 4.2 V, with a constant voltage (CV) step at the upper cutoff voltage, followed by a 5 min resting period before discharge. The CV step was limited either by time (1 h) or residual current (0.02C).

Capacity retention is defined as ratio between discharge capacity of the X cycle divided by the discharge capacity of the first cycle. For each material value the average of 2 cells is shown, Table 1

**Table 1: results of electrochemical testings**

| Capacity Retention (%) | C.CAM.1 | CAM.1 |
|---|---|---|
| After 200 cycles | 93.2 ± 0.05 | 95.4 ± 0.05 |
| After 400 cycles | 86.0 ± 0.5 | 92.3 ± 0.05 |
| After 600 cycles | 80.5 ± 1.0 | 89.5 ± 0.15 |

## Claims

1. Process for making a coated oxide material, said process comprising the following steps:
(a) providing a particulate material selected from lithiated nickel-cobalt aluminum oxides and lithiated layered nickel-cobalt-manganese oxides with a nickel content in the range of from 10 to 95 mole-% nickel, percentages referring to the metals other than lithium in such particulate material,
(b) optionally, treating said particulate material with an aqueous medium, followed by removing said aqueous medium,
(c) treating said particulate material from step (a) or (b) with a metal amide or alkyl metal compound dissolved or slurried in an organic solvent,
(d) removal of organic solvent employed in step (c).

2. Process according to claim 1 wherein said particulate material has the formula Li₁₊ₓTM₁₋ₓO₂, wherein TM contains a combination of Ni and Co at least one metal selected from Al and Mn, and, optionally, at least one metal selected from Ba, and Mg and, optionally, one or more transition metals other than Ni, Co, and Mn, and x is in the range of from -0.1 to 0.33.

3. Process according to claim 2 wherein at least 75 mole-% of TM is Ni.

4. Process according to any of the preceding claims wherein the metal organic compound is selected from aluminum trialkyl compounds.

5. Process according to any of the preceding claims wherein step (c) is performed at a temperature in the range of from 10 to 80°C.

6. Process according to any of claims 2 to 5 wherein TM is a combination of metals according to general formula (I a)
(NiₐCo_{b}Mn_{c})_{1-d}M¹_{d} (I a)
with a + b + c = 1 and
a being in the range of from 0.75 to 0.90,
b being in the range of from 0.05 to 0.2,
c being in the range of from 0.05 to 0.2,
d being in the range of from zero to 0.1,
M¹ is at least one of Al, W, Mo, Ti or Zr.

7. Process according to any of the preceding claims wherein step (d) is performed by filtration or distillation.

8. Process according to any of the preceding claims wherein the particulate material provided in step (a) or (b) has a moisture content in the range of from 100 to 2,000 ppm, determined by Karl-Fischer titration.

9. Process according to any of the preceding claims wherein step (b) is performed by slurrying the particulate material in water followed by removal of the water by a solid-liquid separation method and drying at a maximum temperature in the range of from 50 to 450°C.

## Patentansprüche

1. Verfahren zur Herstellung eines beschichteten Oxidmaterials, wobei das Verfahren die folgenden Schritte umfasst:
(a) Bereitstellen eines teilchenförmigen Materials, das aus lithiierten Nickelcobaltaluminiumoxiden und lithiierten schichtförmigen Nickelcobaltmanganoxiden mit einem Nickelgehalt im Bereich von 10 bis 95 Mol-% Nickel ausgewählt wird, wobei sich Prozentangaben auf die Metalle außer Lithium in einem derartigen teilchenförmigen Material beziehen,
(b) gegebenenfalls Behandeln des teilchenförmigen Materials mit einem wässrigen Medium mit anschließendem Entfernen des wässrigen Mediums,
(c) Behandeln des teilchenförmigen Materials aus Schritt (a) bzw. (b) mit einer in einem organischen Lösungsmittel gelösten oder aufgeschlämmten Metallamid- oder Alkylmetallverbindung,
(d) Entfernen des in Schritt (c) eingesetzten organischen Lösungsmittels.

2. Verfahren nach Anspruch 1, wobei das teilchenförmige Material die Formel Li₁₊ₓTM₁₋ₓO₂ aufweist, wobei TM eine Kombination von Ni und Co, mindestens einem aus Al und Mn ausgewählten Metall und gegebenenfalls mindestens einem aus Ba und Mg ausgewählten Metall und gegebenenfalls einem oder mehreren Übergangsmetallen außer Ni, Co und Mn enthält und x im Bereich von -0,1 bis 0,33 liegt.

3. Verfahren nach Anspruch 2, wobei es sich bei mindestens 75 Mol-% von TM um Ni handelt.

4. Verfahren nach einem der vorhergehenden Ansprüche, wobei die metallorganische Verbindung aus Aluminiumtrialkylverbindungen ausgewählt wird.

5. Verfahren nach einem der vorhergehenden Ansprüche, wobei Schritt (c) einer Temperatur im Bereich von 10 bis 80 °C durchgeführt wird.

6. Verfahren nach einem der Ansprüche 2 bis 5, wobei es sich bei TM um eine Kombination von Metallen gemäß der allgemeinen Formel (I a)
(NiₐCo_{b}Mn_{c})_{1-d}M¹_{d} (I a)
mit a + b + c = 1 handelt, wobei
a im Bereich von 0,75 bis 0,90 liegt,
b im Bereich von 0,05 bis 0,2 liegt,
c im Bereich von 0,05 bis 0,2 liegt,
d im Bereich von null bis 0,1 liegt,
M¹ für mindestens eines von Al, W, Mo, Ti oder Zr steht.

7. Verfahren nach einem der vorhergehenden Ansprüche, wobei Schritt (d) mittels Filtration oder Destillation durchgeführt wird.

8. Verfahren nach einem der vorhergehenden Ansprüche, wobei das in Schritt (a) bzw. (b) bereitgestellte teilchenförmige Material einen durch Karl-Fischer-Titration bestimmten Feuchtigkeitsgehalt im Bereich von 100 bis 2000 ppm aufweist.

9. Verfahren nach einem der vorhergehenden Ansprüche, wobei Schritt (b) durch Aufschlämmen des teilchenförmigen Materials in Wasser mit anschließender Entfernung des Wassers mittels einer Feststoff-Flüssigkeit-Trennmethode und Trocknen bei einer Höchsttemperatur im Bereich von 50 bis 450 °C durchgeführt wird.

## Revendications

1. Procédé pour la préparation d'un matériau d'oxyde revêtu, ledit procédé comprenant les étapes suivantes :
(a) mise à disposition d'un matériau particulaire choisi parmi des oxydes de nickel-cobalt aluminium lithiés et des oxydes de nickel-cobalt-manganèse lithiés stratifiés dotés d'une teneur en nickel dans la plage allant de 10 à 95 % en moles de nickel, les pourcentages faisant référence aux métaux autres que le lithium dans un tel matériau particulaire,
(b) éventuellement, traitement dudit matériau particulaire avec un milieu aqueux, suivi par l'élimination dudit milieu aqueux,
(c) traitement dudit matériau particulaire de l'étape (a) ou (b) avec un composé de type amine métallique ou alkyl-métal dissous ou mis en suspension dans un solvant organique,
(d) élimination de solvant organique employé dans l'étape (c).

2. Procédé selon la revendication 1, ledit matériau particulaire possédant la formule Li₁₊ₓTM₁₋ₓO₂, TM contenant une combinaison de Ni et Co, au moins un métal choisi parmi Al et Mn, et, éventuellement, au moins un métal choisi parmi Ba, et Mg et, éventuellement, un ou plusieurs métaux de transition autres que Ni, Co et Mn, et x étant dans la plage allant de -0,1 à 0,33.

3. Procédé selon la revendication 2, au moins 75 % en moles de TM étant Ni.

4. Procédé selon l'une quelconque des revendications précédentes, le composé organique métallique étant choisi parmi des composés de type trialkylaluminium.

5. Procédé selon l'une quelconque des revendications précédentes, l'étape (c) étant réalisée à une température dans la plage allant de 10 à 80 °C.

6. Procédé selon l'une quelconque des revendications 2 à 5, TM étant une combinaison de métaux selon la formule générale (Ia)
(NiₐCo_{b}Mn_{c})_{1-d}M¹_{d} (Ia)
avec a + b + c = 1 et
a étant dans la plage allant de 0,75 à 0,90,
b étant dans la plage allant de 0,05 à 0,2,
c étant dans la plage allant de 0,05 à 0,2,
d étant dans la plage allant de zéro à 0,1,
M¹ étant au moins l'un parmi Al, W, Mo, Ti et Zr.

7. Procédé selon l'une quelconque des revendications précédentes, l'étape (d) étant réalisée par filtration ou distillation.

8. Procédé selon l'une quelconque des revendications précédentes, le matériau particulaire mis à disposition dans l'étape (a) ou (b) possédant une teneur en humidité dans la plage allant de 100 à 2 000 ppm, déterminée par titrage Karl-Fischer.

9. Procédé selon l'une quelconque des revendications précédentes, l'étape (b) étant réalisée en mettant en suspension le matériau particulaire dans de l'eau suivi par l'élimination de l'eau par un procédé de séparation solide-liquide et séchage à une température maximale dans la plage allant de 50 à 450 °C.
